# EUROPÄISCHE PATENTSCHRIFT

(11) **EP 2 729 674 B1**
(45) Veröffentlichungstag und Bekanntmachung des Hinweises auf die Patenterteilung: **04.11.2015**
(21) Anmeldenummer: 12728291.1
(22) Anmeldetag: 21.06.2012
(51) Int. Cl.: F01N 3/20

(54) **DOSIERSYSTEM SOWIE 3/2-WEGEVENTIL FÜR EIN DOSIERSYSTEM**
DOSING SYSTEM AND 3/2 DIRECTIONAL VALVE FOR A DOSING SYSTEM
SYSTÈME DE DOSAGE ET DISTRIBUTEUR 3/2 POUR UN SYSTÈME DE DOSAGE

(30) Priorität: 05.07.2011 DE 102011078657
(43) Veröffentlichungstag der Anmeldung: 14.05.2014
(73) Patentinhaber: Robert Bosch GmbH, 70442 Stuttgart (DE)
(72) Erfinder: HAEBERER, Rainer, 75015 Bretten (DE)
(86) Internationale Anmeldenummer: PCT/EP2012/062018
(87) Internationale Veröffentlichungsnummer: WO 2013/004517

(56) Entgegenhaltungen:
- WO-A1-2004/047963
- WO-A1-2008/006840
- DE-A1- 19 750 138
- DE-A1-102007 033 470
- DE-A1-102009 037 564

## Beschreibung

Die Erfindung betrifft ein Dosiersystem zum Eindosieren eines Reduktionsmittels, insbesondere einer wässrigen Harnstofflösung, in den Abgasstrang einer Brennkraftmaschine mit den Merkmalen des Oberbegriffes des Anspruchs 1 , wie z.B. in der DE 10 2007 033470 gezeigt.

### Stand der Technik

Aufgrund stetig steigender gesetzlicher Anforderungen an die Emissionswerte von Brennkraftmaschinen werden zur Einhaltung der vorgegebenen Grenzwerte die Abgase einer Nachbehandlung unterzogen. Zur Reduzierung des Stickoxidausstosses, insbesondere bei Dieselmotoren, werden Reduktionskatalysatoren eingesetzt, mittels derer die Stickoxid-Emissionen (NOₓ) deutlich abgesenkt werden können. Bevor die Abgase in den Katalysator gelangen, wird ihnen ein Reduktionsmittel zugeführt, wie beispielsweise eine wässrige Harnstofflösung, welche die Bildung von Ammoniak bewirkt, das wiederum mit den Stickoxiden im nachgeschalteten Katalysator zu harmlosem Stickstoff und Wasser reagiert. Die Zufuhr der wässrigen Harnstofflösung erfolgt über Dosiersysteme, die regelmäßig einen Vorratstank zur Bevorratung des Reduktionsmittels, ein Dosierventil sowie ein Förderaggregat umfassen, um das im Vorratstank bevorratete Reduktionsmittel dem Dosierventil zuzuführen. Bei solchen Dosiersystemen handelt es sich in der Regel um druckgeregelte hydraulische Systeme.

Ein solches Dosiersystem wird beispielsweise in der DE 10 2004 054 238 A1 beschrieben. Um ein Einfrieren der wässrigen Harnstofflösung bei niedrigen Außentemperaturen und damit ggf. eine Beschädigung des Dosiersystems zu verhindern, wird in dieser Druckschrift vorgeschlagen, wenigstens einen mit Flüssigkeit beaufschlagten Bereich zwischen einer Dosierstelle und einem Vorratstank entgegengesetzt zu einer Normalbetrieb-Förderrichtung der Flüssigkeit zu entleeren. Hierzu weist das Dosiersystem vorzugsweise eine Förderpumpe mit umkehrbarer Drehrichtung auf. Alternativ wird eine Umkehr der Förderrichtung durch Einsatz geeigneter Ventile, beispielsweise eines 4/2-Wege-Ventils, vorgeschlagen. Ein 4/2-Wege-Ventil ist in Abhängigkeit von der jeweiligen Ventilstellung in die eine oder in die andere Förderrichtung durchlässig.

Um eine Entleerung eines Dosiersystems auch ohne Förderrichtungsumkehr zu ermöglichen, so dass der Einsatz einer kostenintensiven Förderpumpe mit Drehrichtungsumkehr und/oder eines teuren Spezialventils entbehrlich ist bzw. sind, wird in der DE 10 2007 044 403 B4 ein Dosiersystem mit einem in einer Rückführleitung angeordnetem Absperrmittel und einem in einer Ansaugleitung angeordneten Belüftungsmittel vorgeschlagen. Über die Rücksaugleitung, welche stromab eines Fördermittels von einer Zuführleitung abzweigt, ist ein Abgabemittel mit einem Vorratsbehälter verbindbar. Die Ansaugleitung dagegen zweigt stromauf des Fördermoduls von der Zuführleitung ab und ist ebenfalls an den Vorratsbehälter angeschlossen. Vorzugsweise sind Absperrmittel und Belüftungsmittel als Ventile, weiterhin vorzugsweise als 2/2-Wegeventile ausgebildet. Im Normalbetrieb sind beide Ventile geschlossen. Um einen Entleerungsbetrieb zu ermöglichen werden beide Ventile geöffnet. Über die Ansaugleitung wird nunmehr Gas aus dem Vorratsbehälter angesaugt. Das Gasvolumen wird dem Abgabemittel zugeführt und verdrängt dabei das in der Zuführleitung befindliche Reduktionsmittel. Über die Rückführleitung und das geöffnete Absperrmittel gelangt das Reduktionsmittel zurück in den Vorratsbehälter. Sofern entweder das Absperrmittel oder das Belüftungsmittel geöffnet werden, kann im Förderbetrieb der Pumpe auch ein Im-Kreis-Pumpen oder ein Durchspülen der Zuführleitung realisiert werden.

Ausgehend von dem vorstehend beschriebenen Stand der Technik liegt der Erfindung die Aufgabe zugrunde, ein alternatives Konzept für ein Dosiersystem anzugeben, das weder den Einsatz eines kostspieligen Fördermoduls noch eines teuren Spezialventils erfordert, um ein Rückspülen des Systems zu ermöglichen. Auf diese Weise soll ein einfach und kostengünstig herzustellendes Dosiersystem geschaffen werden.

Zur Lösung der Aufgabe wird ein Dosiersystem mit den Merkmalen des Anspruchs 1 vorgeschlagen. Vorteilhafte Weiterbildungen der Erfindung sind in den Unteransprüchen angegeben.

### Offenbarung der Erfindung

Das vorgeschlagene Dosiersystem zum Eindosieren eines Reduktionsmittels, insbesondere einer wässrigen Harnstofflösung, in den Abgasstrang eines Kraftfahrzeuges umfasst ein Dosierventil, einen Reduktionsmittel-Vorratstank und ein Fördermodul zum Fördern des Reduktionsmittels über eine Zulaufleitung vom Vorratstank zum Dosierventil sowie eine Rücklaufleitung, welche stromab des Fördermoduls von der Zulaufleitung abzweigt und an den Vorratstank angeschlossen ist. Das Dosiersystem umfasst ferner eine Ventilanordnung zur Realisierung einer Rücksaugfunktion. Erfindungsgemäß weist die Ventilanordnung ein in der Zulaufleitung stromauf des Fördermoduls angeordnetes erstes 2/2-Wegeventil und ein in einer Bypass-Leitung angeordnetes zweites 2/2-Wegeventil auf oder ist als ein 3/2-Wegeventil ausgebildet. Durch Verwendung zweier 2/2-Wegeventile kann mit einfachen Mitteln eine Rücksaugfunktion realisiert werden. Wird anstelle der zwei 2/2-Wegeventile - wie alternativ vorgeschlagen - ein 3/2-Wegeventil eingesetzt, kann das System weiter vereinfacht werden, da beispielsweise die Bypass-Leitung entfallen kann. Über die Bypass-Leitung ist die Druckseite des Fördermoduls mit der Saugseite verbindbar.

Bevorzugt ist das Fördermodul über ein Saugventil und ein Druckventil an die Zulaufleitung angeschlossen, wobei das Saugventil und das Druckventil vorzugsweise als Rückschlagventile ausgebildet sind. Das heißt, dass das Saugventil und das Druckventil als einfache passive Ventile ausgebildet sein können, wodurch das System weiter vereinfacht wird.

Weiterhin bevorzugt umfasst die Rücklaufleitung eine Drossel und/oder ein Druckventil, wobei das Druckventil vorzugsweise wiederum als Rückschlagventil ausgebildet ist. Die Drossel und/oder das Druckventil gewährleisten mit einfachen Mitteln einen konstanten Druck auf der Druckseite des Fördermoduls, indem zu viel gefördertes Reduktionsmittel über die Rücklaufleitung wieder dem Vorratstank zugeführt wird. Zudem ermöglichen sie einen Rücksaugbetrieb, während dessen das Reduktionsmittel ebenfalls über die Rücklaufleitung zurück in den Vorratstank gelangt.

Vorteilhafterweise ist das Fördermodul eine Kolbenpumpe. Das System kann dadurch weiter vereinfacht und kostengünstig gestaltet werden. Im Saughub der Kolbenpumpe öffnet das vorzugsweise als Rückschlagventil ausgebildete Saugventil selbsttätig, so dass Reduktionsmittel aus dem Vorratstank über die Zulaufleitung in den Pumpenarbeitsraum gelangt. Im Förderhub der Pumpe wird das Reduktionsmittel verdichtet und über das ebenfalls als Rückschlagventil ausgebildete und damit selbsttätig öffnende Druckventil über die Zulaufleitung dem Dosierventil zugeführt.

Das ferner zur Lösung der Aufgabe vorgeschlagene 3/2-Wegeventil für ein erfindungsgemäßes Dosiersystem umfasst ein Gehäuse, an welchem drei Anschlüsse ausgebildet sind, und ein zum Schalten der Anschlüsse zwischen zwei Ventilsitzen hin und her bewegliches Schließelement, das elektrisch oder elektromagnetisch betätigbar und in Richtung eines Ventilsitzes zudem durch die Federkraft eines Federelementes beaufschlagt ist. Das 3/2-Wegeventil vermag die beiden zuvor in Zusammenhang mit dem erfindungsgemäßen Dosiersystem beschriebenen 2/2-Wegeventile zu ersetzen. Zudem kann bei Einsatz eines erfindungsgemäßen 3/2-Wegeventils die ebenfalls zuvor beschriebene Bypass-Leitung entfallen. Dadurch können die Leitungswege verkürzt und das System kompakter gestaltet werden.

Über seine drei Anschlüsse ist das 3/2-Wegeventil derart mit einem Vorratstank und einem Fördermodul verbindbar, dass in einer ersten Schaltstellung, in welcher das Schließelement am zweiten Ventilsitz anliegt, so dass der erste Ventilsitz geöffnet ist, eine Verbindung des Vorratstanks mit der Saugseite des Fördermoduls hergestellt ist. Diese Schaltstellung ermöglicht demnach den Normalbetrieb des Dosiersystems, bei welchem Reduktionsmittel über das Fördermodul aus dem Vorratstank angesaugt und einem Dosierventil zugeführt wird. In einer zweiten Schaltstellung liegt das Schließelement am ersten Ventilsitz an und der zweite Ventilsitz ist geöffnet. In dieser Schaltstellung ist die Druckseite des Fördermoduls mit der Saugseite verbindbar, wohingegen die Verbindung zum Vorratsbehälter unterbrochen ist. Das Fördermodul saugt demnach Reduktionsmittel aus der druckseitigen Zulaufleitung an, so dass bei gleichzeitig geöffnetem Dosierventil Luft in das System gelangt, während das Reduktionsmittel über die Rücklaufleitung zurück in den Vorratstank gelangt. Die zweite Schaltstellung dient demnach der Realisierung einer Rücksaugfunktion.

Gemäß einer bevorzugten Ausführungsform der Erfindung ist das Schließelement plattenförmig ausgebildet und mit wenigstens einer Dichtung versehen, welche mit einem Ventilsitz dichtend zusammenwirkt. Die Dichtung soll eine Leckage im Bereich des jeweiligen Ventilsitzes verhindern, um eine unerwünschte Wiederbefüllung des Systems insbesondere bei Stillstand zu verhindern. Denn in der Regel sind die Ventile des Fördermoduls außerhalb des Betriebsmodus undicht, so dass die Gefahr besteht, dass sich aufgrund der Luftleckage und des hydrostatischen Drucks des im Vorratstank bevorrateten Reduktionsmittels das System wieder befüllt. Die Gefahr besteht insbesondere bei einem Unterfluranbau des Systems, das heißt bei Anordnung des Systems unterhalb des Flüssigkeitsspiegels des Tanks. In der Folge ist das System nicht mehr eisdrucktauglich. Um dieser Gefahr entgegen zu wirken, ist am plattenförmigen Schließelement eine Dichtung vorgesehen. Vorzugsweise ist die Dichtung derart am plattenförmigen Schließelement angeordnet, dass sie mit dem ersten Ventilsitz dichtend zusammenwirkt. Die Dichtung kann beispielsweise durch eine dünne Gummischicht realisiert werden, die auf das plattenförmige Schließelement aufvulkanisiert worden ist. Alternativ oder ergänzend kann auch wenigstens ein Ventilsitz, vorzugsweise der erste Ventilsitz, mit einer aufvulkanisierten Gummischicht versehen sein.

Die Anordnung der Ventilsitze erfolgt bevorzugt in der Weise, dass sich diese gegenüber liegen. Zum Öffnen und Schließen muss dann das Schließelement nur hin und her bewegt werden. Hierzu reicht der Einsatz eines Aktors, vorzugsweise eines Elektromagneten. In stromlosem Zustand des Aktors wird das Schließelement über die Federkraft des Federelementes in Anlage mit einem Ventilsitz gehalten, während in bestromtem Zustand der Aktor das Schließelement entgegen der Federkraft des Federelementes in Richtung des jeweils anderen Ventilsitzes bewegt. Um eine langlebige, robuste Ausführung des 3/2-Wegeventils zu erhalten, ist das Schließelement mittels der Federkraft des Federelementes vorzugsweise in Richtung des zweiten Ventilsitzes beaufschlagt. Im Normalbetrieb des Systems ist damit der erste Ventilsitz, über welchen das Fördermodul mit dem Vorratstank verbunden ist, stromlos offen. Es entsteht keine unnötige Abwärme, da der Elektromagnet nur zur Realisierung der Rücksaugfunktion bestromt wird. Dadurch erhöht sich auch die Lebensdauer des Ventils. Als vorteilhaft kann sich auch eine Beaufschlagung des Schließelementes mittels der Federkraft des Federelementes in Richtung des ersten Ventilsitzes erweisen. Im Normalbetrieb wird dann zum Öffnen des ersten Ventilsitzes der Elektromagnet bestromt. Im Fehlerfall, wenn die Bestromung des Elektromagneten unterbrochen ist, besteht dann die Möglichkeit, das System über das Federelement abzuschalten, da die Federkraft des Federelementes das Schließelement in den ersten Ventilsitz zurückstellt.

Bevorzugte Ausführungsformen der Erfindung werden nachfolgend anhand der Zeichnungen näher beschrieben. Diese zeigen:
- Fig. 1: eine schematische Darstellung eines erfindungsgemäßen Dosiersystems bei Normalbetrieb (im Saugmodus des Fördermoduls),
- Fig. 2: eine schematische Darstellung des Systems der Fig. 1 bei Normalbetrieb (im Fördermodus des Fördermoduls),
- Fig. 3: eine schematische Darstellung des Systems der Fig. 1 bei Rücksaugbetrieb (im Saugmodus des Fördermoduls),
- Fig. 4: eine schematische Darstellung des Systems der Fig. 1 bei Rücksaugbetrieb (im Fördermodus des Fördermoduls),
- Fig. 5: eine schematische Darstellung eines ersten erfindungsgemäßen 3/2-Wegeventils,
- Fig. 6: eine schematische Darstellung des Systems der Fig. 1 bei Stillstand und
- Fig. 7: eine schematische Darstellung eines zweiten erfindungsgemäßen 3/2-Wegeventils.

### Ausführliche Beschreibung der Zeichnungen

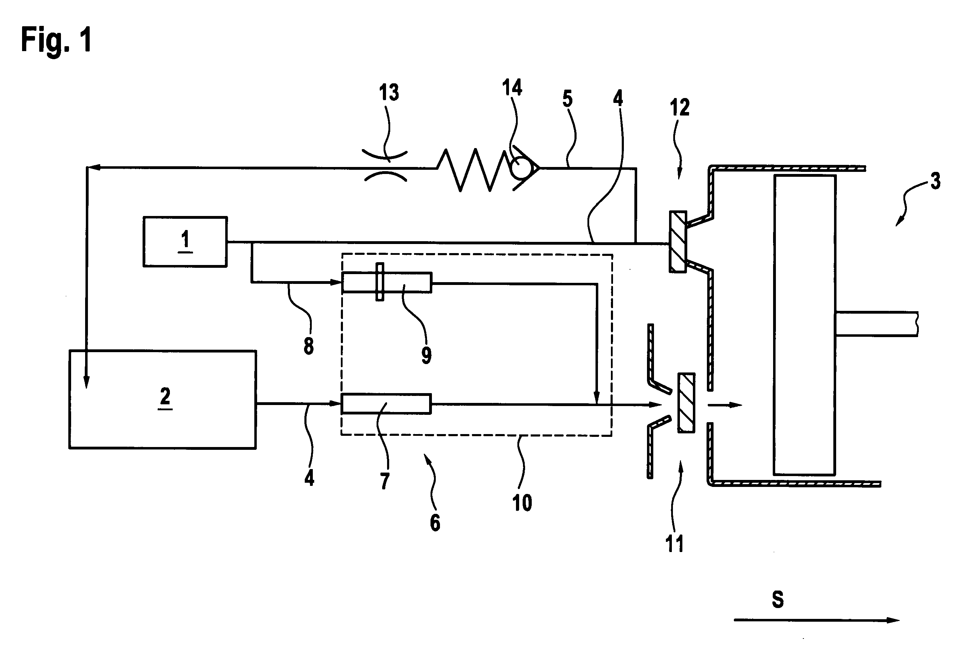

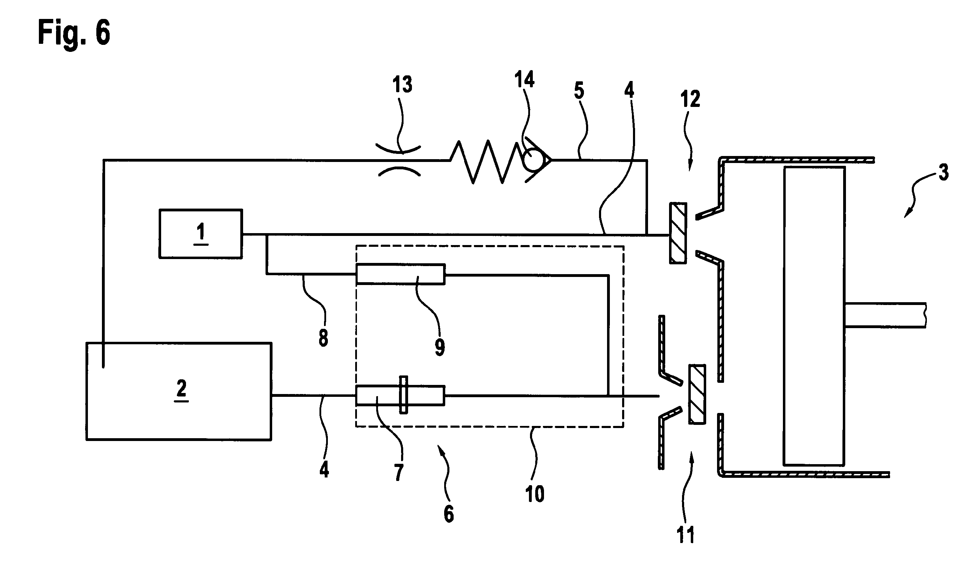

Nachfolgend werden zunächst der Aufbau und die Funktionsweise eines erfindungsgemäßen Dosiersystems anhand der Figuren 1 bis 4 und 6 erklärt.

Das in den Figuren 1 bis 4 und 6 dargestellte erfindungsgemäße Dosiersystem umfasst ein Dosierventil 1 und einen Vorratstank 2, in welchem ein Reduktionsmittel, vorzugsweise eine wässrige Harnstofflösung, bevorratet ist. Ferner umfasst das Dosiersystem ein Fördermodul 3, vorliegend eine Kolbenpumpe, welche im Normalbetrieb das Reduktionsmittel aus dem Vorratstank 2 über eine Zulaufleitung 4 dem Dosierventil 1 zuführt. Auf der Druckseite des Fördermoduls 3 zweigt von der Zulaufleitung 4 eine Rücklaufleitung 5 ab, in welcher eine Drossel 13 und ein Druckventil 14 in Form eines einfachen Rückschlagventils angeordnet sind. Die Drossel 13 und das Druckventil 14 stellen sicher, dass über das Fördermodul 3 zu viel gefördertes Reduktionsmittel nicht dem Dosierventil 1, sondern dem Vorratstank 2 zugeführt wird. Ferner umfasst das System eine Ventilanordnung 6, welche ein erstes und ein zweites 2/2-Wegeventil 7, 8 umfasst oder als 3/2-Wegeventil 10 ausgebildet ist.

In der Ausführung mit einem ersten und einem zweiten 2/2-Wegeventil 7, 9, ist das erste 2/2-Wegeventil 7 in der Zulaufleitung 4 auf der Saugseite des Fördermoduls 3 und das zweite 2/2-Wegeventil 9 in einer Bypass-Leitung 8 angeordnet. Sofern die Ventilanordnung 6 als ein 3/2-Wegeventil 10 ausgebildet ist, kann die Bypass-Leitung 8 entfallen.

Das Fördermodul 3 ist derart an die Ventilanordnung 6 angeschlossen, dass das System in einer ersten Schaltstelllung im Normalbetrieb und in einer zweiten Schaltstellung im Rücksaugbetrieb betrieben werden kann.

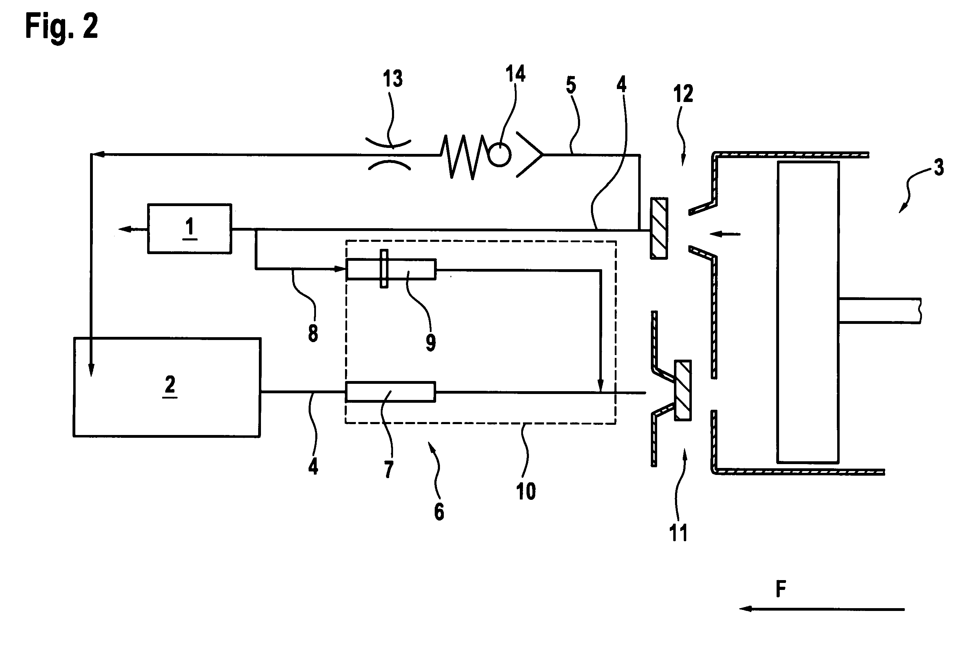

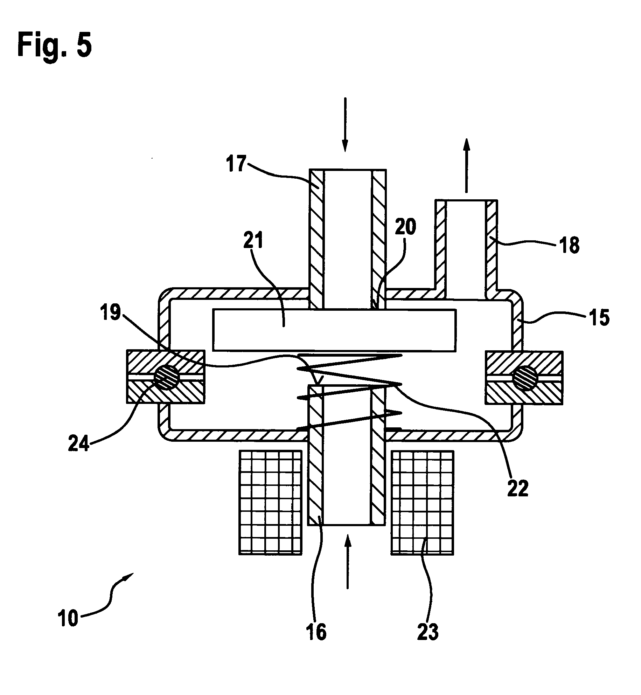

Die Figuren 1 und 2 zeigen das System im Normalbetrieb, wobei das Fördermodul 3 in Figur 1 einen Saughub (siehe Pfeil S) und in Figur 2 einen Förderhub (siehe Pfeil F) ausführt. Im Normalbetrieb ist das Ventil 7 in der Zulaufleitung 4 geöffnet und das Ventil 9 in der Bypass-Leitung 8 geschlossen. Sofern die Ventilanordnung 6 als 3/2-Wegeventil 10 ausgebildet ist, werden die Ventile 7, 9 durch die Ventilsitze 19, 20 ersetzt. Das heißt, dass im Normalbetrieb der erste Ventilsitz 19 geöffnet und der zweite Ventilsitz 20 geschlossen ist. Wie aus Figur 5 ersichtlich sind in dieser Schaltstellung die Anschlüsse 16 und 18 hydraulisch verbunden, wobei es sich bei dem Anschluss 16 um den Tankanschluss und bei dem Anschluss 18 um den Anschluss an die Saugseite des Fördermoduls 3 handelt. Ein weiterer Anschluss 17, welcher einer Verbindung der Druckseite des Fördermoduls 3 mit der Saugseite ermöglicht, wird in dieser Schaltstellung von einem am zweiten Ventilsitz 20 anliegenden Schließelement 21 verschlossen. Das Schließelement 21 wird hier über die Federkraft eines Federelementes 22 in Anlage mit dem zweiten Ventilsitz 20 gehalten. Das 3/2-Wegeventil wird in den Figuren 1 bis 4 und 6 durch einen gestrichelten Umriss angedeutet.

Wie aus Figur 1 ersichtlich wird im Normalbetrieb über das Fördermodul 3 Reduktionsmittel aus dem Vorratstank 2 dem Dosierventil 1 zugeführt. Übersteigt der Druck in der Zulaufleitung 4 einen bestimmten Grenzdruck, öffnet das in der Rücklaufleitung 5 angeordnete als Rückschlagventil ausgebildete Druckventil 14 und die überschüssige Menge Reduktionsmittel wird zurück in den Tank 2 geführt. Im Normalbetrieb öffnet während des Saughubes ein Saugventil 11 des Fördermoduls 3 während ein Druckventil 12 geschlossen ist (Figur 1). Das Reduktionsmittel gelangt somit in den Pumpenarbeitsraum. Während des Förderhubes des Fördermoduls 3 schließt das Saugventil 11 und das Reduktionsmittel wir im Pumpenarbeitsraum verdichtet, bis wiederum ein bestimmter Grenzdruck erreicht ist und das Druckventil 12 öffnet (siehe Figur 2).

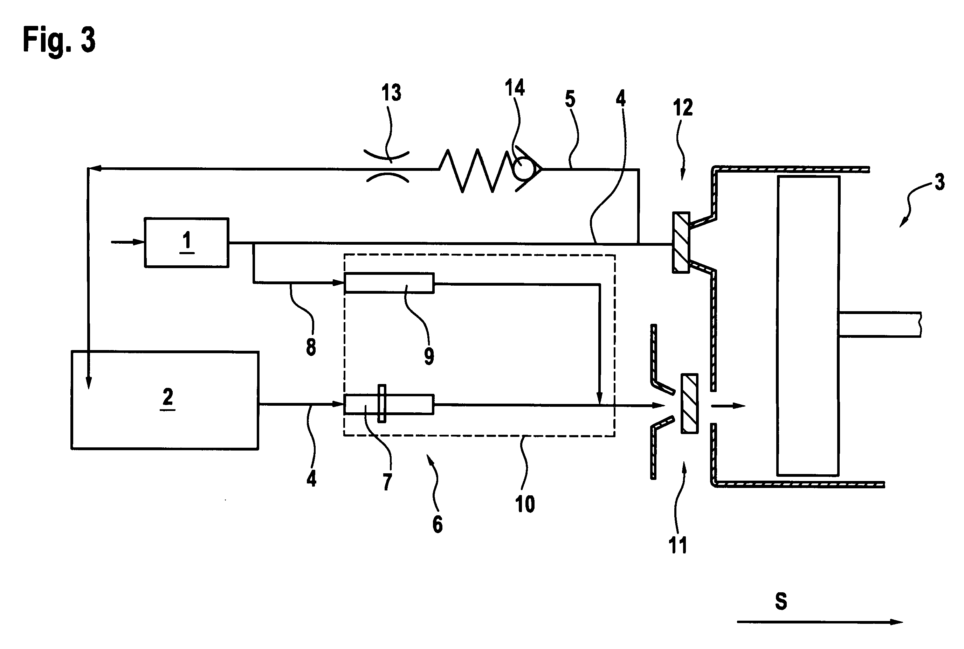

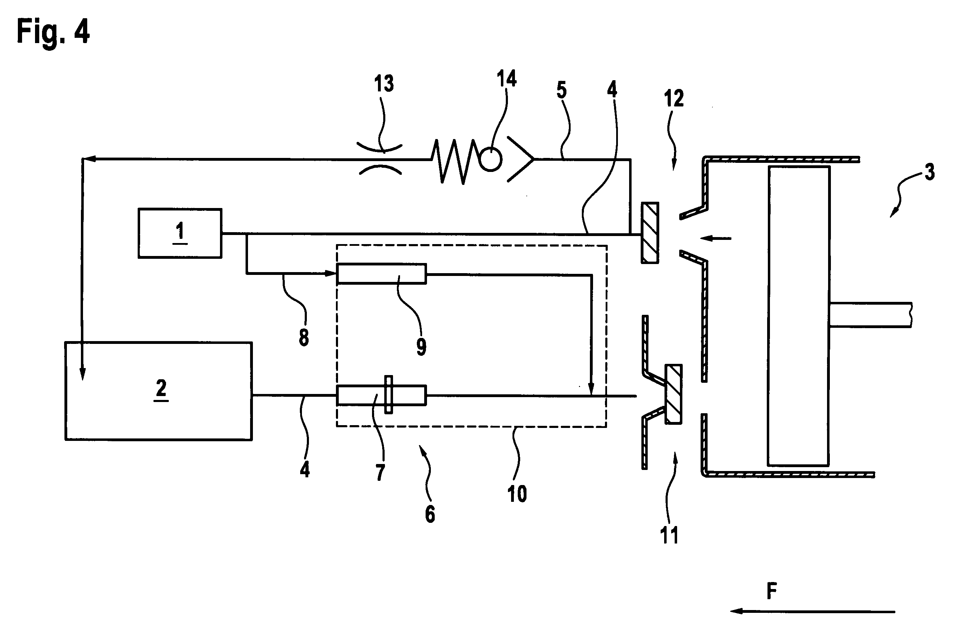

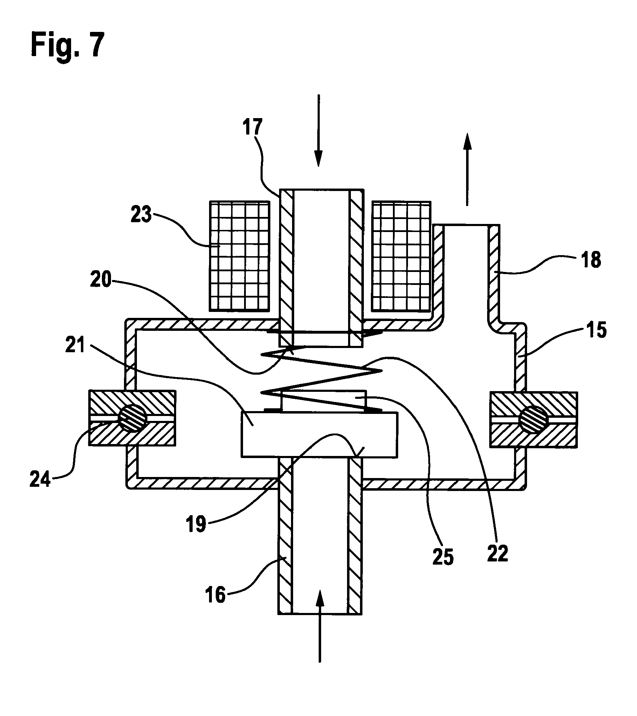

In den Figuren 3 und 4 ist nun das System im Rücksaugbetrieb dargestellt. Im Rücksaugbetrieb ist das Ventil 7 bzw. der erste Ventilsitz 19 geschlossen und das Ventil 9 bzw. der zweite Ventilsitz 20 geöffnet (siehe Figur 7). Die Saugseite des Fördermoduls 3 ist nunmehr mit der Druckseite verbunden. Während des Saughubs (siehe Pfeil S in Figur 3) saugt das Fördermodul 3 demnach Reduktionsmittel aus dem druckseitigen Teil der Zulaufleitung 4 an, wodurch ein Unterdruck entsteht und das Dosierventil 1, das vorzugsweise als nach innen öffnendes Ventil ausgebildet ist, öffnet. Über das Dosierventil 1 gelangt Luft in die Zulaufleitung 4 (siehe Figur 3). Das über das Fördermodul 3 aus der Zulaufleitung 4 angesaugte Reduktionsmittel wird während des Förderhubes (siehe Pfeil F in Figur 4) im Pumpenarbeitsraum verdichtet und über das Druckventil 12 wieder der Zulaufleitung 4 zugeführt. Dort wird es durch die bereits angesaugte Luft verdrängt und über die Rücklaufleitung 5 und das geöffnete Druckventil 14 zurück in den Vorratstank 2 geführt (siehe Figur 4).

Da der Einsatz eines 3/2-Wegeventils 10 eine kompakte Ausgestaltung des Systems ermöglicht, wir diese Ausführungsform bevorzugt. Bevorzugte Ausführungsformen eines erfindungsgemäßen 3/2-Wegeventils werden nachfolgend anhand der Figuren 5 und 7 näher beschrieben.

Ein erfindungsgemäßes 3/2-Wegeventil 10 weist ein Gehäuse 15 auf, das vorliegend zweiteilig ausgeführt ist und alle Anschlüsse 16, 17, 18 umfasst. Die Anschlüsse 16 und 17 liegen sich gegenüber und bilden jeweils einen Ventilsitz 19, 20 aus, zwischen welchen ein plattenförmiges Schließelement 21 hin und her beweglich gelagert ist. Ferner sin ein Federelement 22, welches das Schließelement 21 in Richtung eines Ventilsitzes 19, 20 mit einer Federkraft beaufschlagt, und ein Elektromagnet 23 als Betätigungsmittel vorgesehen. Der Elektromagnet 23 ist derart angeordnet, dass er bei Bestromung das Schließelement 21 entgegen der Federkraft des Federelementes 22 in Richtung des jeweils anderen Ventilsitzes 20, 19 bewegt. In dem Ausführungsbeispiel der Figur 5 hält das Federelement 22 das Schließelement 21 in Anlage mit dem zweiten Ventilsitz 20. Dies hat den Vorteil, dass im Normalbetrieb des Systems der Elektromagnet 23 nicht bestromt werden muss. Zusätzliche Abwärme wird dadurch vermieden und die Lebensdauer des Ventils erhöht sich. In dem Ausführungsbeispiel der Figur 7 wird das Schließelement 21 von der Federkraft des Federelementes 22 in Anlage mit dem ersten Ventilsitz 19 gehalten. Im Normalbetrieb des Systems ist damit der Elektromagnet 23 bestromt, was sich zunächst als nachteilig darstellen mag. In dieser Ausgestaltung ermöglicht das 3/2-Wegeventil jedoch eine Notabschaltung des Systems, indem bei fehlender Bestromung des Elektromagneten 23 die Federkraft des Federelementes 22 das Schließelement 21 zurück in den Ventilsitz 19 stellt.

Des Weiteren unterscheidet sich das Ausführungsbeispiel der Figur 7 von dem der Figur 5 dadurch, dass das Schließelement 21, vorzugsweise eine Stahlplatte aus magnetischem Edelstahl, mit einer Dichtung 25 versehen ist. Die Dichtung kann beispielsweise aus einer dünnen Gummischicht bestehen, die auf eine oder beide Seiten des plattenförmigen Schließelementes 21 aufvulkanisiert worden ist. Im Ausführungsbeispiel der Figur 7 ist die mit dem zweiten Ventilsitz 20 zusammenwirkende Dichtfläche des Schließelementes 21 mit einer entsprechenden Dichtung versehen.

Das Gehäuse 15, das in beiden Ausführungsbeispielen zweiteilig ausgeführt ist, besteht vorzugsweise aus Kunststoff. Die beiden Hälften des Gehäuses 15 sind über eine Dichtung 24 gegeneinander abgedichtet. Die Magnetspule, das Joch und die sonstigen magnetflussführenden Teile des Elektromagneten 23 sind vorzugsweise in den Kunststoff des Gehäuses 15 eingespritzt, so dass diese vor dem aggressiven Reduktionsmittel geschützt sind. Die Kunststoffummantelung im Bereich des Arbeitsluftspaltes sollte dabei nicht dicker als 0,5 mm gewählt werden.

Ausgehend von einem Ventilsitzdurchmesser von etwa 2 mm kann das System mit einem Systemdruck von etwa 10 bar und einer Federkraft des Federelementes 22 von etwa 5 N sowie einer Magnetkraft des Elektromagneten 23 von etwa 10 N sicher betrieben werden. Derart geringe Kräfte führen zu einer kleinen kompakten Bauweise der Ventilanordnung 6.

## Patentansprüche

1. Dosiersystem zum Eindosieren eines Reduktionsmittels, insbesondere einer wässrigen Harnstofflösung, in den Abgasstrang eines Kraftfahrzeuges, umfassend ein Dosierventil (1), einen Reduktionsmittel-Vorratstank (2) und ein Fördermodul (3) zum Fördern des Reduktionsmittels über eine Zulaufleitung (4) vom Vorratstank (2) zum Dosierventil (1) sowie eine Rücklaufleitung (5), welche stromab des Fördermoduls (3) von der Zulaufleitung (4) abzweigt und an den Vorratstank (2) angeschlossen ist, wobei das Dosiersystem ferner eine Ventilanordnung (6) zur Realisierung einer Rücksaugfunktion umfasst,
**dadurch gekennzeichnet, dass** die Ventilanordnung (6), die in der Zulaufleitung (4) stromauf des Fördermoduls (3) angeordnet ist, entweder als ein 3/2-Wegeventil (10) ausgebildet ist, oder ein erstes 2/2-Wegeventil (7) und ein in einer Bypass-Leitung angeordnetes zweites 2/2-Wegeventil (9) aufweist.

2. Dosiersystem nach Anspruch 1,
**dadurch gekennzeichnet, dass** das Fördermodul (3) über ein Saugventil (11) und ein Druckventil (12) an die Zulaufleitung (4) angeschlossen ist, wobei das Saugventil (11) und das Druckventil (12) vorzugsweise als Rückschlagventile ausgebildet sind.

3. Dosiersystem nach Anspruch 1 oder 2,
**dadurch gekennzeichnet, dass** die Rücklaufleitung (5) eine Drossel (13) und/oder ein Druckventil (14) umfasst, wobei das Druckventil (14) vorzugsweise als Rückschlagventil ausgebildet ist.

4. Dosiersystem nach einem der vorhergehenden Ansprüche,
**dadurch gekennzeichnet, dass** das Fördermodul (3) eine Kolbenpumpe ist.

5. Dosiersystem nach einem der vorhergehenden Ansprüche, **dadurch gekennzeichnet, daß** das 3/2-Wegeventil (10) ein Gehäuse (15) umfasst, an welchem drei Anschlüsse (16, 17, 18) ausgebildet sind, und ein zum Schalten der Anschlüsse (16, 17, 18) zwischen zwei Ventilsitzen (19, 20) hin und her bewegliches Schließelement (21), das elektrisch oder elektromagnetisch betätigbar und in Richtung eines Ventilsitzes (19, 29) zudem durch die Federkraft eines Federelementes (22) beaufschlagt ist.

6. Dosiersystem nach Anspruch 5, **dadurch gekennzeichnet, dass** das Schließelement (21) plattenförmig ausgebildet und mit einer Dichtung (25) versehen ist, welche mit einem Ventilsitz (19, 20) des 3/2-Wegeventils (10) dichtend zusammenwirkt.

## Claims

1. Dosing system for dosing a reducing agent, in particular an aqueous urea solution, into the exhaust tract of a motor vehicle, comprising a dosing valve (1), a reducing agent storage tank (2) and a delivery module (3) for delivering the reducing agent via a feed line (4) from the storage tank (2) to the dosing valve (1), and a return line (5), which branches off from the feed line (4) downstream of the delivery module (3) and is connected to the storage tank (2), wherein the dosing system furthermore comprises a valve arrangement (6) for realizing a back-suction function,
**characterized in that** the valve arrangement (6), which is arranged in the feed line (4) upstream of the delivery module (3), is either in the form of a 3/2 directional valve (10) or has a first 2/2 directional valve (7) and, arranged in a bypass line, a second 2/2 directional valve (9).

2. Dosing system according to Claim 1,
**characterized in that** the delivery module (3) is connected to the feed line (4) via a suction valve (11) and a pressure valve (12), wherein the suction valve (11) and the pressure valve (12) are preferably in the form of check valves.

3. Dosing system according to Claim 1 or 2, **characterized in that** the return line (5) comprises a throttle (13) and/or a pressure valve (14), wherein the pressure valve (14) is preferably in the form of a check valve.

4. Dosing system according to one of the preceding claims,
**characterized in that** the delivery module (3) is a piston pump.

5. Dosing system according to one of the preceding claims,
**characterized in that** the 3/2 directional valve (10) comprises a housing (15), on which three ports (16, 17, 18) are formed, and a closing element (21), which is movable back and forth between two valve seats (19, 20) for the purposes of switching the ports (16, 17, 18) and which is electrically or electromagnetically actuable and which is furthermore loaded in the direction of one valve seat (19, 20) by the spring force of a spring element (22).

6. Dosing system according to Claim 5, **characterized in that** the closing element (21) is of plate-shaped form and is equipped with a seal (25) which interacts sealingly with a valve seat (19, 20) of the 3/2 directional valve (10).

## Revendications

1. Système de dosage pour le dosage d'un agent réducteur, en particulier d'une solution d'urée aqueuse, dans la ligne d'échappement d'un véhicule automobile, comprenant une soupape de dosage (1), un réservoir d'agent réducteur (2) et un module de transport (3) pour transporter l'agent réducteur par le biais d'une conduite d'amenée (4) depuis le réservoir (2) jusqu'à la soupape de dosage (1) et une conduite de retour (5) qui part de la conduite d'amenée (4) en aval du module de transport (3) et qui est raccordée au réservoir (2), le système de dosage comprenant en outre un agencement de soupape (6) pour réaliser une fonction d'aspiration de retour,
**caractérisé en ce que** l'agencement de soupape (6) qui est disposé dans la conduite d'amenée (4) en amont du module de transport (3) soit est réalisé sous forme de soupape à 3/2 voies (10) soit présenté une première soupape à 2/2 voies (7) et une deuxième soupape à 2/2 voies (9) disposée dans une conduite de dérivation.

2. Système de dosage selon la revendication 1, **caractérisé en ce que** le module de transport (3) est raccordé par le biais d'une soupape d'aspiration (11) et d'une soupape de pression (12) à la conduite d'amenée (4), la soupape d'aspiration (11) et la soupape de pression (12) étant réalisées de préférence sous forme de clapets anti-retour.

3. Système de dosage selon la revendication 1 ou 2, **caractérisé en ce que** la conduite de retour (5) comprend un étranglement (13) et/ou une soupape de pression (14), la soupape de pression (14) étant réalisée de préférence sous forme de clapet anti-retour.

4. Système de dosage selon l'une quelconque des revendications précédentes,
**caractérisé en ce que** le module de transport (3) est une pompe à piston.

5. Système de dosage selon l'une quelconque des revendications précédentes, **caractérisé en ce que** la soupape à 3/2 voies (10) comprend un boîtier (15) au niveau duquel sont réalisés trois raccords (16, 17, 18), et un élément de fermeture (21) se déplaçant suivant un mouvement de va-et-vient pour commuter les raccords (16, 17, 18) entre deux sièges de soupape (19, 20), lequel peut être commandé électriquement ou électromagnétiquement et est en outre sollicité dans la direction d'un siège de soupape (19, 20) par la force de ressort d'un élément de ressort (22).

6. Système de dosage selon la revendication 5, **caractérisé en ce que** l'élément de fermeture (21) est réalisé en forme de plaque et est pourvu d'un joint d'étanchéité (25) qui coopère de manière hermétique avec un siège de soupape (19, 20) de la soupape à 3/2 voies (10).
